## Europäisches Patentamt
## European Patent Office
## Office européen des brevets

(11) Veröffentlichungsnummer: **0 100 838**
**A2**

(12) ## EUROPÄISCHE PATENTANMELDUNG

(21) Anmeldenummer: **83105799.7**

(22) Anmeldetag: **14.06.83**

(51) Int. Cl.³: **G 01 B 7/00**

(30) Priorität: **17.07.82 DE 3226801**

(43) Veröffentlichungstag der Anmeldung:
**22.02.84 Patentblatt 84/8**

(84) Benannte Vertragsstaaten:
**AT BE CH DE FR GB IT LI LU NL SE**

(71) Anmelder: **THYSSENGAS GMBH**
**Duisburger Strasse 277**
**D-4100 Duisburg/Hamborn(DE)**

(72) Erfinder: **Jerig, Johannes**
**Taubenstrasse 25**
**D-4100 Duisburg-Hamborn(DE)**

(74) Vertreter: **König, Reimar, Dr.-Ing. et al,**
**Patentanwälte Dr.-Ing. Reimar König Dipl.-Ing. Klaus**
**Bergen Wilhelm-Tell-Strasse 14 Postfach 260162**
**D-4000 Düsseldorf 1(DE)**

(54) Stellungsanzeigegerät für Dehnungsausgleicher.

(57) Bei einem Stellungsanzeigegerät für Dehnungsausgleicher (4) zwischen zwei Baugruppen (5, 6) mit einem Stellungsgeber (8, 9) an jeder Baugruppe ergibt sich auch unter
rauhen Umgebungsbedingungen auf einfache Weise eine
funktionssichere Stellungsanzeige durch eine einseitig starr
mit der einen Baugruppe (5) verbundene, mit ihrem freien
Ende (11) in mindestens eine, starr mit der anderen Baugruppe (6) verbundene, elektrische Leiterschleife (12) eingreifende Schubstange (10) zum Durchtrennen dieser Leiterschleife
in einer vorbestimmten Stellung des Dehnungsausgleichers.

EP 0 100 838 A2

./...

Fig. 1

Thyssengas GmbH, Duisburger Straße 277, 4100 Duisburg-
Hamborn

"Stellungsanzeigegerät für Dehnungsausgleicher"

Die Erfindung betrifft ein Stellungsanzeigegerät für
Dehnungsausgleicher zwischen zwei Baugruppen mit einem
Stellungsgeber an jeder Baugruppe.

Dehnungsausgleicher sind unter anderem als Rohrkompensatoren wie Lyrabögen, Wellrohrkompensatoren, Dehnungsstopfbuchsen, aber auch in abgewandelter Form bei
Brücken und ähnlichen Bauwerken bekannt. Sie sollen
zwischen zwei zusammengehörenden Baugruppen aufgrund von
Wärme, mechanischen oder ähnlichen Spannungen entstehende Lageänderungen der Baugruppen zueinander ausgleichen,
um die zwischen den Baugruppen bestehende funktionelle
Verbindung zu erhalten. Besonders wichtig sind Dehnungsausgleicher bei Rohrleitungen, die in durch Bodenbewegungen sich verlagernden Erdmassen verlegt sind. Solche
Bodenbewegungen ergeben sich als Folge des untertägigen
Bergbaus in horizontaler und vertikaler Richtung. Die
hierdurch entstehenden Spannungen (Zerrungen oder
Pressungen) in den Rohrleitungen werden daher in bestimmten Abständen durch Dehnungsausgleicher wie z.B.
Dehnungstopfbüchsen aufgehoben. Gasfernleitungen weisen
hierfür an den Rohrenden meistens an der einen Seite ein
Degenrohr und an der anderen Seite ein das Degenrohr umfassendes Hülsrohr sowie eine Stopfbuchse am Erdflansch
des Hülsrohres auf; solche Dehnungsausgleicher nehmen
heute Gesamtlängenänderungen bis zu etwa 800 mm auf. Die
Dehnungsausgleicher werden meistens in einer Mittelstellung eingebaut, so daß für beide Bewegungsrichtungen,
d.h. für Pressungen und für Zerrungen zwischen den Rohrenden eine gleichgroße Bewegungsfreiheit von z.B. jeweils 400 mm besteht.

Auch wenn dem Betreiber einer Gasleitung mit Dehnungsausgleichern regelmäßig z.B. durch untertägigen Bergbau entstandene Änderungen der Erdoberfläche mitgeteilt werden, kann für ihn eine von solchen Mitteilungen unabhängige Überwachung der Dehnung von Wichtigkeit sein, um z.B. gewisse Tendenzen zu erkennen und frühzeitig über den maximalen Dehnungszustand informiert zu werden. Ein Überschreiten des maximalen Dehnungsausgleiches würde kostspielige Folgen haben.

Eine Kontrolle von Dehnungsausgleichern ist aber sehr zeitaufwendig, wenn zu ihrem Freilegen Erdarbeiten notwendig sind. Es sind deshalb auch Stellungsanzeigegeräte im Einsatz, die eine Fernmessung an Dehnungsausgleichern gestatten. Die bekannten Dehnungsmeßverfahren wie das mechanische, optische oder elektronische Messen der Positionsänderung von Stellungsgebern an den verbundenen Baugruppen haben den Nachteil, daß sie sich nur sehr schwer gegen Feuchtigkeit und Bodenbewegungen schützen lassen, so daß Funktionsstörungen zu erwarten sind, die zu falschen Meßanzeigen führen. Die ebenfalls bekannten Dehnungsmeßstreifen sind meist schon deshalb ungeeignet, weil die hier in Betracht kommenden Längenänderungen in der Regel relativ groß sind.

Der Erfindung liegt daher die Aufgabe zugrunde, ein Stellungsanzeigegerät zu schaffen, das ohne großen Aufwand möglichst häufige Kontrollen an Dehnungsausgleichern gestattet, ohne daß seine Funktion durch Umwelteinflüsse gefährdet ist und bei dem eine Übertragung der Meßanzeigen zu weit entfernt liegenden Prüfstationen möglich ist.

Die Erfindung löst diese Aufgabe durch eine einseitig starr mit der einen Baugruppe verbundene, mit ihrem freien Ende in mindestens eine, starr mit der anderen Baugruppe verbundene elektrische Leiterschleife eingreifende Schubstange zum Durchtrennen der Leiterschleife in einer vorbestimmten Stellung des Dehnungsausgleichers.

Der Lösungsgedanke beruht also darauf, daß in einer vorbestimmten Relativstellung der beiden Baugruppen und damit den beiden Teilen des Dehnungsausgleichers eine elektrische Leiterschleife irreversibel durchtrennt wird, was sich bei einer einfachen Kontrollmessung zwischen den freien Enden der Leiterschleife ohne Schwierigkeit und sicher feststellen läßt. Dadurch werden teure elektronische, mechanische oder optische Vorrichtungen vermieden, und es können weder durch Feuchtigkeit noch durch Erdbewegungen oder andere mechanische Belastungen Funktionsstörungen eintreten. Kontrollmessungen sind auch über große Entfernungen, d.h. mit langen Zuleitungskabeln möglich, da hier nicht ein bestimmter und deshalb auch verfälschbarer Meßwert zu erfassen ist, sondern lediglich die Tatsache, ob eine Leiterschleife noch Stromdurchgang hat oder nicht mehr.

Die hierzu erforderlichen Vorrichtungen lassen sich auf einfachste Weise gegen die erwartete Beanspruchung leicht schützen. Alarmgeräte können das Durchtrennen einer Leiterschleife mit Sicherheit anzeigen, aber auch einen eventuellen Defekt in den Übertragungsleitungen. Dadurch entfallen irreführende Meßanzeigen, und Wartungsarbeiten beschränken sich auf den Fall eines tatsächlich eingetretenen Defektes oder des Erreichens einer vorbestimmten Endstellung des Dehnungsausgleichers. Ein weiterer Vorteil besteht darin, daß sich vorhandene Dehnungsausgleicher mit dem erfindungsgemäßen Stellungsanzeigegerät auf einfache Weise nachrüsten lassen.

Außerdem ist es möglich, eine beliebige Anzahl der erfindungsgemäßen Stellungsanzeigegeräte an einer Rohrleitung, zusätzlich zu Meßstellen für die einzelnen Stellungsanzeigegeräte, hintereinander an oftmals die Rohrleitungen begleitende Betriebstelefonleitungen anzuschließen und damit über ein Alarmgerät das Erreichen der Endstellung eines der Dehnungsausgleicher direkt in der Betriebsüberwachungszentrale anzuzeigen. - Welcher Stellungsanzeiger den Alarm ausgelöst hat, muß anhand des Kontrollbuches über die Routinemessungen ermittelt werden. Daraus ist zu ersehen, welcher Dehnungsausgleicher bereits kurz vor der Endstellung gestanden hat. Anschließende Kontrollmessungen vor Ort geben genaue Auskunft. Diese Lösung ist besonders vorteilhaft im Hinblick auf Sicherheit, Effektivität und Einsparung von Personalkosten für zusätzliche Kontrollgänge zu Meßstellen der Dehnungsausgleicher, die nahezu den kritischen Bereich erreicht haben. - Der Anschluß an bereits verlegte Betriebstelefonleitungen ist in den meisten Fällen mit Rückgriff auf Reserveleiter möglich, weil nur zwei Leiter - ein Leiter für die Endstellung der Pressung und ein Leiter für die Endstellung der Zerrung - benötigt werden.

Die Schutstange kann auf Pressungen und/oder Zerrungen

- 5 -

am Dehnungsausgleicher ansprechen, d.h. daß sich ihr freies Ende in beiden Richtungen innerhalb der oder den Leiterschleifen bewegt. Die Leiterschleifen und das freie Ende der Schubstange müssen lediglich so angeordnet sein, daß in einer vorbestimmten Relativstellung der beiden Baugruppen eine der Leiterschleifen und das freie Ende der Schubstange derart in Anlage und unter mechanische Spannung gelangen und daß beim Überschreiten dieser Position die betreffende Leiterschleife durchtrennt wird.

Zum Schutz gegen mechanische Einflüsse und zur Vorfertigung des die Leiterschleifen aufnehmenden Stellungsgebers empfiehlt sich ein die Leiterschleifen aufnehmendes Schutzgehäuse, das seinerseits mit der zugehörigen Baugruppe starr verbunden ist.

Um nicht nur das Erreichen der Endstellungen der Dehnungsausgleicher feststellen zu können, sondern auch Zwischenstellungen und damit die Richtung des Dehnungsausgleichs zu erfassen, müssen mehrere Leiterschleifen hintereinander in Dehnungsrichtung angeordnet sein. Dabei wird das Eingreifen des freien Endes der Schubstange in diese Schleifen bevorzugt dadurch erreicht, daß die Leiterschleifen quer durch ein elektrisch nichtleitendes Rohr gezogen, vorzugsweise gespannt sind, innerhalb dessen sich das freie Ende der Schubstange verschiebt. Hierdurch ist ein sehr genaues Positionieren möglich, und durch leichtes Vorspannen der Leiterschleifen innerhalb des nichtleitenden Rohres wird ihr Durchhängen vermieden und damit eine sehr exakte Stellungsanzeige möglich.

Ein sicheres Durchtrennen der Leiterschleifen wird da-

- 6 -

durch verbessert, daß das freie Ende der Schubstange als Rohrstück mit mindestens zwei einandern gegenüberliegenden, von mindestens einer Leiterschleife durchgezogenen Durchbrechungen versehen ist. Solche Durchbrechungen können an beiden Enden in Dehnungsrichtung für ein Durchtrennen der Leiterschleifen sorgen; ein eventuelles Abrutschen zwischen der (den) Leiterschleife(n) und dem freien Ende der Schubstange wird also sicher vermieden. Außerdem kann das freie Ende des Rohrstückes in einer Bewe-gungsrichtung ebenfalls Leiter-schleifen durchtrennen.

Das Durchtrennen der Leiterschleifen wird durch Schneidkanten am freien Ende der Schubstangen erleichtert. Solche Schneidkanten sind jeweils in Bewegungsrichtung des Dehnungsausgleichers angeordnet.

Ein Sicherungsstift kann das Verdrehen des freien Endes der Schubstange verhindern und dadurch sicherstellen, daß die Leiterschleifen aufgrund einer eventuellen Drehbewegung ungewollt durchtrennt werden.

Ein Gelenk zwischen der Schubstange und ihrem freien Ende gestattet ein verkantungsfreies Bewegen des freien Endes relativ zu den Leiterschleifen, unabhängig von schräg am Dehnungsausgleicher angreifenden Kräften.

Zur besseren Montage vor Ort empfiehlt sich mindestens eine Positionierungsvorrichtung zwischen einer der Leiterschleifen und dem freien Ende der Schubstange; die Positionierung gegenüber den übrigen Leiterschleifen ergibt sich dann von alleine aufgrund ihrer vorgegebenen gegenseitigen Anordnung.

- 7 -

Leiterschleifen aus kunststoffummantelten Kupferdrähten sind unempfindlich gegen Feuchtigkeit und mechanische Beanspruchungen; sie bewirken außerdem eine elektrische Isolierung gegenüber geerdeten Metallteilen und ermöglichen auch bei großen Entfernungen das Messen mit kleinen Prüfströmen bzw. Spannungen.

Eine besonders preiswerte und einfache Messung mit dem Stellungsanzeigegerät ergibt sich durch ein in die Leiterschleifen einfügbares Stromdurchgangsmeßgerät, weil hierdurch nicht nur auf einfachste Weise geprüft werden kann, ob eine Leiterschleife bereits durchtrennt oder noch unversehrt ist, sondern viele Leiterschleifen nacheinander mit ein und demselben Gerät geprüft werden können. Die für die Überprüfung mit einem Meßgerät zu verbindenden freien Enden der Leiterschleifen werden vorteilhaft für mindestens einen Dehnungsausgleicher an einer Meßkontaktplatte zusammengefaßt, die an einem für das Bedienungspersonal leicht zugänglichen Ort angeordnet sein kann.

Die Erfindung wird im folgenden anhand eines in der Zeichnung dargestellten Ausführungsbeispiels des näheren erläutert.

In der Zeichnung zeigen:

Fig. 1    eine Prinzipdarstellung eines in eine unterirdische Rohrleitung eingebauten Dehnungsausgleichers mit Stellungsanzeigegerät und

Fig. 2    einen vergrößert dargestellten Stellungsgeber für mehrere Leiterschleifen in einem perspektivischen Teilschnitt.

- 8 -

Ein aus einem Degenrohr 1, einem Hülsrohr 2 sowie einer Stopfbuchse 3 bestehender Dehnungsausgleicher 4 ist zwischen zwei jeweils aus einem Rohr bestehenden Baugruppen 5, 6 innerhalb des Erdreichs 7 angeordnet. Für die Stellungsanzeige des Dehnungsausgleichers 4 befindet sich an jeder Baugruppe ein Stellungsgeber 8, 9, der aus einer einseitig starr mit der Baugruppe 5 verbundenen, mit ihrem freien Ende 11 in Leiterschleifen 12, 13 eingreifenden Schubstange 10 besteht. Die Leiterschleifen sind innerhalb eines aus einem etwa einzölligen Rohr bestehenden Schutzgehäuses 14, das mit der Baugruppe 6 starr verbunden ist, derart fixiert, daß ihre geschlossenen Endbögen 15, 16 einer bestimmten Position in Längsrichtung des Dehnungsausgleichers 4 entsprechen; dabei entspricht die Position des Endbogens 15 der maximalen und die Position des Endbogens 16 der minimalen Dehnungsstellung des Dehnungsausausgleichers 4.

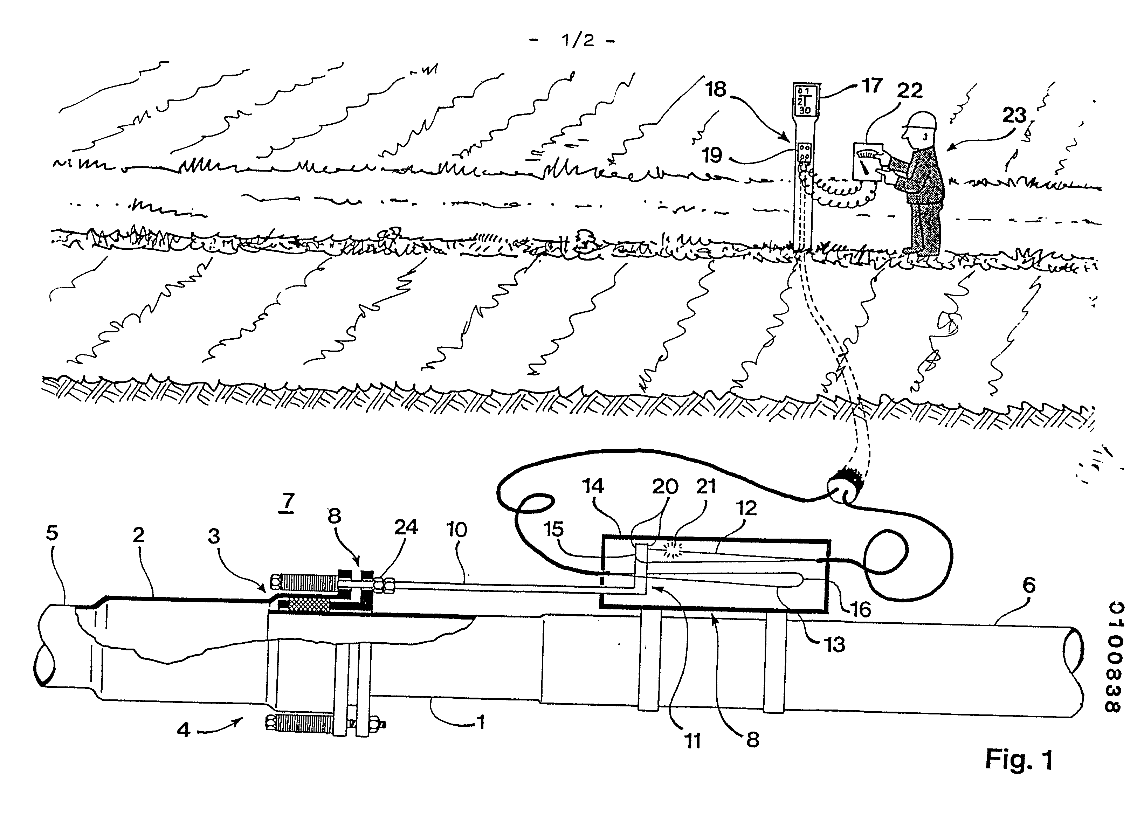

An mindestens einem der den Endbögen 15, 16 gegenüberliegenden Enden des Schutzgehäuses 14 treten die zu den einzelnen Leiterschleifen gehörenden Leiterpaare aus, und enden - durch das Erdreich 7 geführt - in einem Schilderpfahl 17 mit einem Meßkasten 18 in einer Meßkontaktplatte 19. Eine Schneidkante 20 am freien Ende 11 der Schubstange 10 hat in der Darstellung der Fig.1 die Leiterschleife 12 soeben an der Stelle 21 durchtrennt; dies wird mittels eines an die Meßkontaktplatte 19 angeschlossenen Stromdurchgangsmeßgerätes 22 von einer Bedienungsperson 23 festgestellt. Dabei braucht der Schilderpfahl 17 nicht unmittelbar oberhalb des Dehnungsausgleichers 4 angeordnet zu sein, sondern er kann auch an z.B. einem Straßenrand aufgestellt sein.

Nach dem Einbau des Dehnungsausgleichers 4 zwischen den Baugruppen 5, 6 wird das freie Ende 11 der Schubstange 10 mittels einer Positioniervorrichtung 24 zunächst in eine Mittelstellung zwischen den beiden Endbögen 15, 16 der aus kunststoffummantelten Kupferdrähten bestehenden Leiterschleifen 12, 13 gebracht.

Sobald die maximale Pressung oder die maximale Zerrung des Dehnungsausgleichers 4 erreicht ist, bzw. (mit einem Sicherheits-Dehnungsweg behaftet) kurz vor dem Erreichen dieser Position, durchtrennt die in die Leiterschleifen eingreifende Schneidkante 20 des in das Schutzgehäuse 14 stirnseitig hineinragenden freien Endes 11 der Schubstange 10 eine der beiden Leiterschleifen 12, 13.

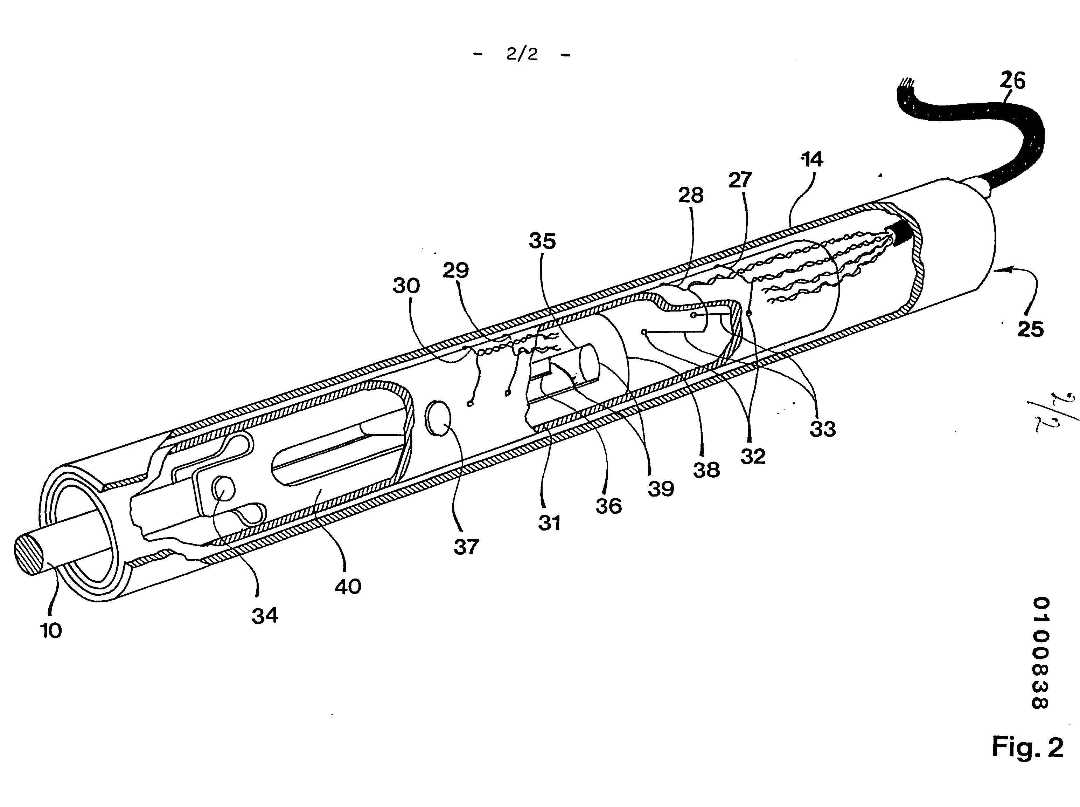

In Fig. 2 ist das Schutzgehäuse 14 als Rohr dargestellt, aus dessen ansonsten verschlossenem Ende 25 ein zum hier nicht dargestellten Meßkasten führendes, eine Leiterschleife aufnehmendes Kabel 26 austritt. Die einzelnen Leiterschleifen 27 bis 30 laufen aus dem Kabel 26 kommend verdrallt an der äußeren Oberfläche eines innerhalb des Schutzgehäuses 14 angeordneten Kunststoffrohres 31 entlang, das an den vorgegebenen Meßpunkten quer zu seiner Längsrichtung mittig durchgehende Bohrungen 32 aufweist. Durch die Bohrungen sind jeweils die geschlossenen Leiterschleifenenden derart geführt, daß sie innerhalb des Kunststoffrohres 31 gerade, quer zur Rohrlängsachse verlaufende Drahtstrecken 33 bilden.

Das Kunststoffrohr 31 ist innerhalb des Schutzrohres 14 angeordnet und mindestens an seinem, dem Kabel 26 gegenüberliegenden Ende zur Aufnahme des freien Endes 11 der

- 10 -

Schubstange 10 offen. An diesem Ende weist das Schutzrohr 14 an der Eintrittsstelle der Schubstange 10 eine
in Fig. 2 nicht dargestellte Stopfbuchse zur Abdichtung
des Rohrinnenraumes gegenüber der Umgebung auf. Die
Schubstange und das freie Ende bestehen vorzugsweise aus
nichtrostendem Stahl und sind durch ein Gelenk 34 miteinander verbunden. Das innerhalb des Kunststoffrohres 31
angeordnete freie Ende 11 ist als beidseitig offenes
Rohrstück 40 mit einander gegenüberliegenden sich in
Längsrichtung des freien Endes 11 erstreckenden Durchbrechungen 35, 36 ausgebildet.

Ein Sicherungsstift 37 greift in die Durchbrechungen 35,
36 ein und verhindert ein Verdrehen des freien Endes 11
gegenüber dem Kunststoffrohr 31. Die Position des freien
Endes 11 innerhalb des Kunststoffrohres 31 entspricht
der Mittelstellung eines hier nicht dargestellten Dehnungsausgleichers. Im Falle einer Pressung schiebt sich
das freie Ende 11 weiter in das Kunststoffrohr 31 hinein
und durchtrennt mit seiner stirnseitigen Schneidkante 38
nacheinander die Drahtstrecken 33 der Leiterschleifen 28
und 27. Die die Durchbrechungen 35, 36 durchziehenden
Leiterschleifen 29, 30 bleiben aufgrund der Größe der
Durchbrechungen dabei unbeschädigt. Im Falle einer
Zerrung würde das freie Ende 11 aus dem Kunststoffrohr
31 ein wenig herausgezogen, so daß durch die Schneidkante 39 an einem stirnseitigen Ende der Durchbrechungen
35, 36 nacheinander die Leiterschleifen 29, 30 durchtrennt würden; auch in diesem Falle bleiben die übrigen
Leiterschleifen unverletzt.

Thyssengas GmbH, Duisburger Straße 277, 4100 Duisburg-Hamborn

"Stellungsanzeigegerät für Dehnungsausgleicher"

Patentansprüche:

1. Stellungsanzeigegerät für Dehnungsausgleicher (4) zwischen zwei Baugruppen (5, 6) mit einem Stellungsgeber (8, 9) an jeder Baugruppe, g e k e n n - z e i c h n e t  d u r c h  eine einseitig starr mit der einen Baugruppe (5) verbundene, mit ihrem freien Ende (11) in mindestens eine, starr mit der anderen Baugruppe (6) verbundene elektrische Leiterschleife (12, 13; 27 bis 30) eingreifende Schubstange (10) zum Durchtrennen der Leiterschleife in einer vorbestimmten Stellung des Dehnungsausgleichers (4).

2. Stellungsanzeigegerät nach Anspruch 1, g e k e n n - z e i c h n e t  d u r c h  eine die Leiterschleifen (12, 13; 27 bis 30) aufnehmendes Schutzgehäuse (14).

3. Stellungsanzeigegerät nach Anspruch 1 oder 2, g e - k e n n z e i c h n e t  d u r c h  ein hintereinander von mehreren Leiterschleifen (27 bis 30) quer durchzogenes, elektrisch nichtleitendes Rohr (31).

4. Stellungsanzeigegerät nach einem oder mehreren der Ansprüche 1 bis 3, g e k e n n z e i c h n e t  d u r c h  ein Rohrstück (40) als freies Ende (11) der Schubstange (10) mit mindestens zwei einander gegenüberliegenden, von mindestens einer Leiterschleife (29, 30) durchzogenen Durchbrechungen (35, 36).

- 12 -

5. Stellungsanzeigegerät nach einem oder mehreren der Ansprüche 1 bis 4, d a d u r c h   g e k e n n - z e i c h n e t ,   daß sich am freien Ende (11) der Schubstange (10) Schneidkanten (20; 38, 39) befinden.

6. Stellungsanzeigegerät nach einem oder mehreren der Ansprüche 1 bis 5, d a d u r c h   g e k e n n - z e i c h n e t ,   daß das freie Ende (11) der Schubstange (10) durch einen Sicherungsstift (37) gegen ein Verdrehen gesichert ist.

7. Stellungsanzeigegerät nach einem oder mehreren der Ansprüche 1 bis 6, g e k e n n z e i c h n e t d u r c h   ein Gelenk (34) zwischen der Schubstange (10) und deren freiem Ende (11).

8. Stellungsanzeigegerät nach einem oder mehreren der Ansprüche 1 bis 7, g e k e n n z e i c h n e t d u r c h   mindestens eine Positioniervorrichtung (24) zwischen einer der Leiterschleifen (12, 13; 27 bis 30) und dem freien Ende (11) der Schubstange (10).

9. Stellungsanzeigegerät nach einem oder mehreren der Ansprüche 1 bis 8, g e k e n n z e i c h n e t d u r c h   Leiterschleifen (12, 13; 27 bis 30) aus kunststoffummantelten Kupferdrähten.

10. Stellungsanzeigegerät nach einem oder mehreren der Ansprüche 1 bis 9, g e k e n n z e i c h n e t d u r c h   ein in die Leiterschleifen (12, 13; 27 bis 30) eingefügtes Stromdurchgangsmeßgerät (22).

11. Stellungsanzeigegerät nach einem oder mehreren der Ansprüche 1 bis 10, g e k e n n z e i c h n e t d u r c h eine, die freien Enden der Leiterschleifen (12, 13) mindestens eines Dehnungsausgleichers (4) aufnehmende Meßkontaktplatte (19).

12. Stellungsanzeigegerät nach einem oder mehreren der Ansprüche 1 bis 11, d a d u r c h g e k e n n - z e i c h n e t , daß die Stellungsanzeigegeräte mehrerer Dehnungsausgleicher (4) hintereinander an eine gemeinsame Informationsleitung angeschlossen sind.

2 kf

Fig. 1

Fig. 2

0100838